# EUROPÄISCHE PATENTANMELDUNG

(11) **EP 1 834 820 A1**
(43) Veröffentlichungstag der Anmeldung: **19.09.2007**
(21) Anmeldenummer: 06005051.5
(22) Anmeldetag: 13.03.2006
(51) Int. Cl.: B60J 7/043

(54) **Panoramadach**

(71) Anmelder: ArvinMeritor GmbH, 63128 Dietzenbach (DE)
(72) Erfinder: Becher, Thomas, 63110 Rodgau (DE); Böhm, Horst, 60599 Frankfurt/Main (DE); Grimm, Rainer, 60598 Frankfurt (DE); Röder, Joachim, 63165 Mühlheim (DE); Rieß, Claudia, 64405 Lichtenberg (DE); Röhnke, Manfred, 63322 Rödermark (DE)
(74) Vertreter: Sties, Jochen

(57) **Zusammenfassung**

Ein Schiebedachsystem mit einem Deckel (4), der dafür ausgelegt ist, über ein Dachelement (5) nach hinten verschoben zu werden, einer Führungsschiene (10) und einem vorderen Ausstellmechanismus (12, 14, 16, 20), mit dem ein Vorderrand des Deckels (4) nach außen ausgestellt werden kann, ist dadurch gekennzeichnet, daß ein hinterer Ausstellmechanismus (34, 36, 38, 40, 42) vorgesehen ist, mit dem ein Hinterrand des Deckels nach außen ausgestellt werden kann und der mit dem vorderen Ausstellmechanismus gekoppelt ist.

## Beschreibung

Die Erfindung betrifft ein Schiebedachsystem mit einem Deckel, der dafür ausgelegt ist, über ein Dachelement nach hinten verschoben zu werden, einer Führungsschiene und einem vorderen Ausstellmechanismus, mit dem ein Vorderrand des Deckels nach außen ausgestellt werden kann.

Ein solches Schiebedachsystem ist meist Teil eines Panoramadaches, bei dem sowohl der Deckel als auch das Dachelement aus transparentem Kunststoff oder Glas ausgeführt sind. Das Dachelement kann entweder feststehend an der Fahrzeugkarosserie bzw. dem Dach angebracht sein oder selbst ausstellbar oder verschiebbar sein. Der Deckel kann zum einen lediglich mit seinem Hinterrand nach außen ausgestellt werden, so daß er eine sogenannte Lüfterstellung einnimmt, oder vollständig nach außen und dann nach hinten verschoben werden, so daß er oberhalb des Dachelements liegt. In diesem Zustand ist die sonst vom Deckel verschlossene Öffnung vor dem Dachelement mehr oder weniger freigegeben.

Wenn der Deckel oberhalb des Dachelements nach hinten verfahren werden soll, stellt sich das Problem, wie der Deckel in der geöffneten Stellung gehalten wird. Am Hinterrand des Deckels, der sich bei zurückgefahrenem Deckel oberhalb des Dachelementes befindet, kann keine aufwendige Führung verwendet werden, da diese Führung mit einer Führungsschiene unterhalb des Dachelements verbunden werden müßte. Daher gibt es Bestrebungen, den gesamten Ausstellmechanismus für den Deckel nur im Bereich des Vorderrandes anzuordnen, so daß der Ausstellmechanismus immer vor dem Dachelement bleibt, also in dem Bereich, der bei geöffnetem Deckel frei zugänglich ist. Das Problem besteht darin, daß ein vergleichsweise stabiler und damit auch großer Ausstellmechanismus erforderlich ist, wenn sämtliche Lasten, die im Betrieb auf den geöffneten Deckel einwirken können, nur an dessen Vorderrand abgestützt werden können. Ein solcher Ausstellmechanismus benötigt einen gewissen Raum, was dazu führt, daß der Verschiebeweg des Deckels nach hinten eingeschränkt ist. Die maximale Verschiebbarkeit des Deckels nach hinten ist schließlich begrenzt durch die Abmessungen des Ausstellmechanismus; der hintere Rand des Ausstellmechanismus kann nicht hinter den Vorderrand des Dachelementes verschoben werden.

Es sind auch Lösungen bekannt, bei denen am Hinterrand des Deckels ein federbelasteter Unterstützungshebel verwendet wird, der einen Teil der auf den ausgestellten Deckel wirkenden Lasten in eine Führungsschiene unterhalb des Dachelements ableitet und dadurch den vorderen Ausstellmechanismus etwas entlastet. Dennoch muß auch bei dieser Lösung der vordere Ausstellmechanismus vergleichsweise massiv ausgelegt werden.

Die Aufgabe der Erfindung besteht darin, ein Schiebedachsystem der eingangs genannten Art zu schaffen, bei dem im Bereich des Vorderrandes des Deckels ein vergleichsweise filigran ausgelegter und damit kurz bauender Ausstellmechanismus verwendet werden kann.

Zur Lösung dieser Aufgabe ist vorgesehen, daß ein hinterer Ausstellmechanismus vorgesehen ist, mit dem ein Hinterrand des Deckels nach außen ausgestellt werden kann und der mit dem vorderen Ausstellmechanismus gekoppelt ist. Die Erfindung beruht auf dem Grundgedanken, die eigentliche Kopplung des Deckels mit einem Antrieb für den Deckel, sprich den Ausstellmechanismus, im wesentlichen im Bereich des Vorderrandes des Deckels zu konzentrieren, jedoch gleichzeitig am Hinterrand des Deckels einen diesen definiert ausstellenden hinteren Ausstellmechanismus zu verwenden. Durch die Verwendung von zwei Ausstellmechanismen läßt sich sehr präzise berechnen, welche Lasten auf den entsprechenden Ausstellmechanismus wirken. Daher können die Ausstellmechanismen sehr präzise ausgelegt werden, und es können schlanke, wenig Raum benötigende Ausstellmechanismen verwendet werden. Insbesondere der vordere Ausstellmechanismus baut daher sehr kurz. Der Deckel kann damit sehr weit über das Dachelement verfahren werden.

Vorteilhafte Ausgestaltungen der Erfindung ergeben sich aus den Unteransprüchen.

Die Erfindung wird nachfolgend anhand einer Ausführungsform beschrieben, die in den beigefügten Zeichnungen dargestellt ist. In diesen zeigen:
- Figur 1 eine perspektivische Ansicht eines Fahrzeugdachs mit einem Schiebedachsystem, dessen Deckel sich in einer teilweise geöffneten Stellung befindet;
- Figur 2 eine schematische Seitenansicht des Schiebedachsystems, wobei sich der Deckel in der geschlossenen Stellung befindet;
- Figur 3 eine Ansicht entsprechend derjenigen von Figur 2, wobei sich der Deckel in einer vollständig geöffneten und nach hinten verschobenen Stellung befindet;
- Figur 4 einen Schnitt entlang der Ebene IV-IV von Figur 2;

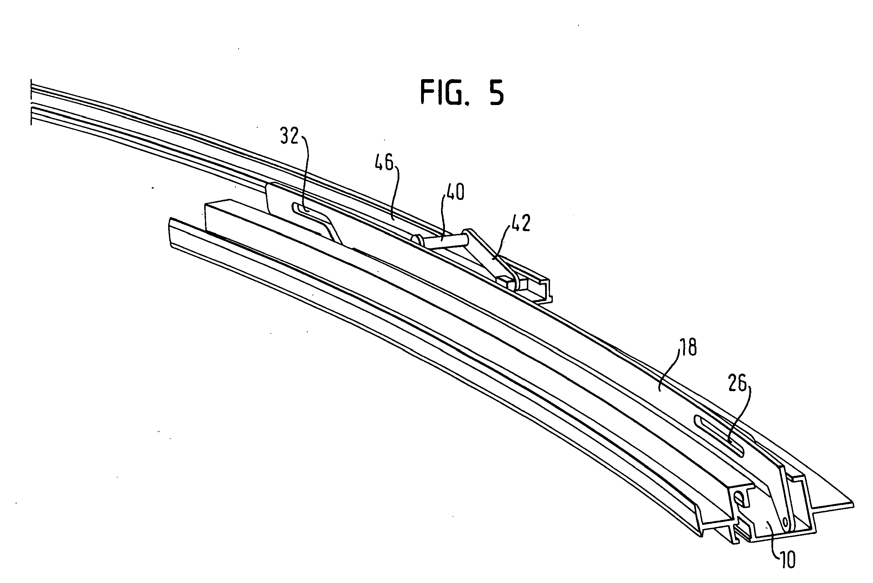

- Figur 5 in einer perspektivischen Ansicht einige Bauteile des Schiebedachsystems;

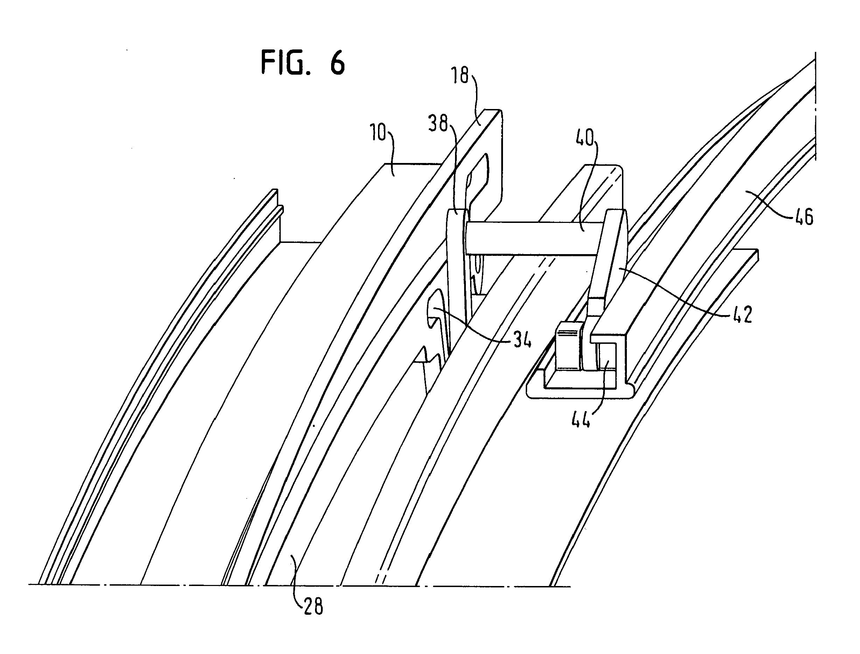

- Figur 6 in einer perspektivischen Ansicht einige Bauteile des hinteren Ausstellmechanismus;

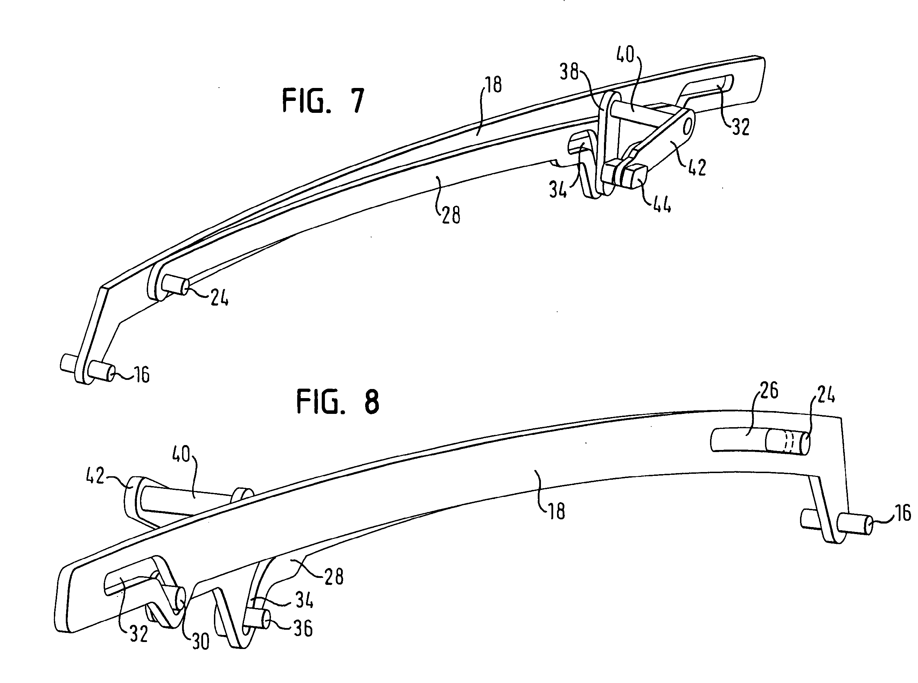

- Figur 7 in einer ersten perspektivischen Ansicht einen Deckelhalter mit den daran angebrachten Bauteilen des hinteren Ausstellmechanismus;
- Figur 8 die Bauteile von Figur 7 in einer weiteren perspektivischen Ansicht; und

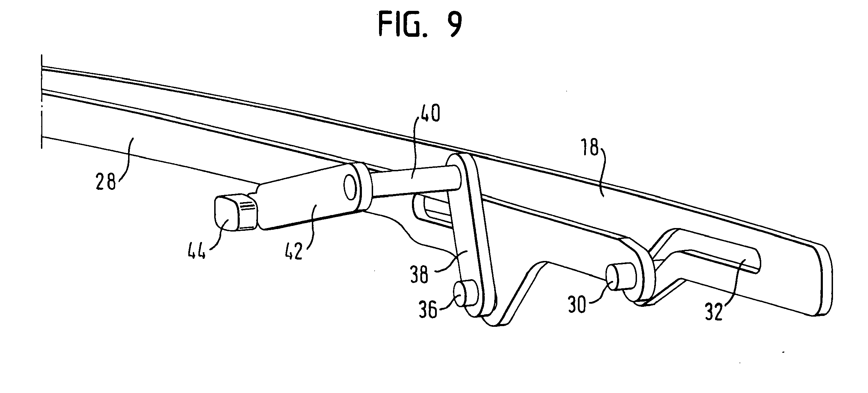

- Figur 9 den hinteren Ausstellmechanismus in einer weiteren perspektivischen Ansicht.

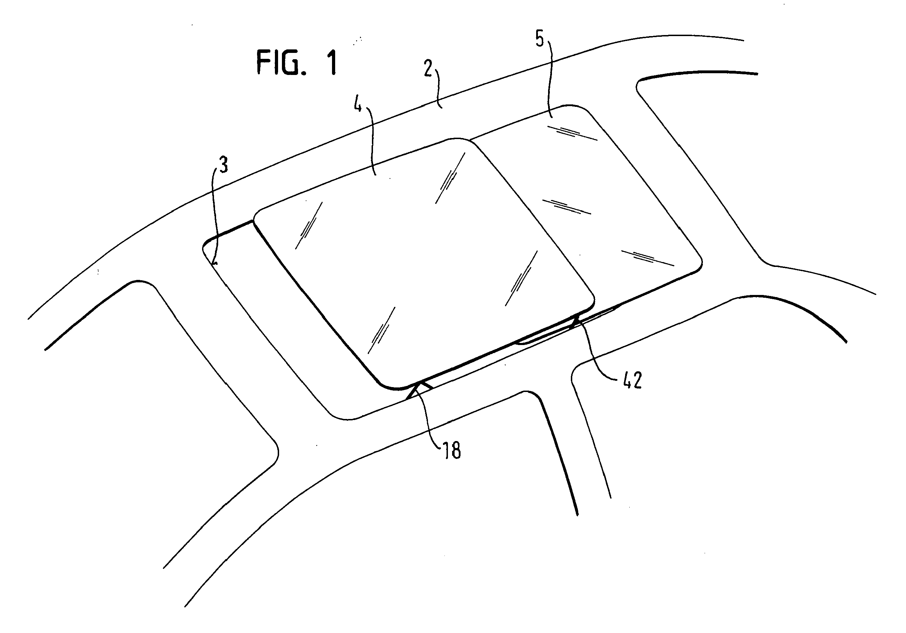

In Figur 1 ist ein Fahrzeugdach 2, in welchem eine Öffnung 3 für einen Deckel 4 ausgebildet ist. Hinter dem Deckel 4 ist ein Dachelement 5 angeordnet. Der Deckel 4 und das Dachelement 5 bestehen aus einem transparenten Material, insbesondere Kunststoff oder Glas.

Soweit hier zur Erläuterung des Schiebedachsystems Begriffe wie "oben", "vorne" oder ähnliche verwendet werden, wird auf die übliche Terminologie bei einem Fahrzeug abgestellt. "Vorne" bedeutet also in Fahrtrichtung, und "oben" bezeichnet die Richtung, die von den Rädern weg weist.

Das Schiebedachsystem weist zwei Führungsschienen 10 auf, die sich entlang den Rändern der Öffnung 3 und bis unterhalb des Dachelementes 5 erstrecken. Da das Schiebedachsystem spiegelsymmetrisch bezüglich einer Mittel-Längsebene des Fahrzeugs aufgebaut ist, wird nachfolgend nur eine Seite des Schiebedachsystems beschrieben.

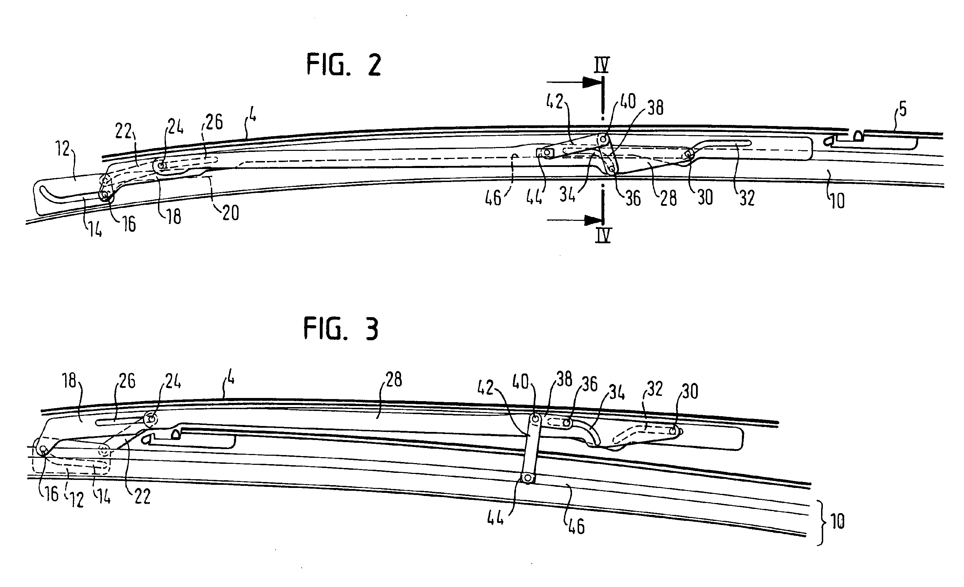

In der Führungsschiene 10 ist ein Schlitten 12 verschiebbar, der in an sich bekannter Weise von einem (nicht gezeigten) zug- und drucksteif geführten Antriebskabel und einem (nicht dargestellten) Antriebsmotor in der Führungsschiene verstellt werden kann. Der Schlitten 12 weist eine Hubkulisse 14 auf, die sich von hinten zunächst leicht schräg nach oben und im vorderen Bereich des Schlittens steiler nach oben erstreckt. In die Hubkulisse 14 greift ein Hubzapfen 16 ein, der zusammen mit der Hubkulisse 14 eine Hubkulissenführung bildet. Der Hubzapfen 16 ist fest an einem Deckelhalter 18 angebracht, an dem der Deckel 4 montiert ist. Der Hubzapfen 16 greift außerdem in eine Kulissenbahn 20 ein, die in Figur 2 gestrichelt angedeutet und fest in der Führungsschiene 10 angebracht ist. Die Kulissenbahn 20 weist an ihrem vorderen Ende einen vergleichsweise steil nach oben ansteigenden Abschnitt und daran anschließend einen parallel zur Erstreckungsrichtung der Führungsschiene nach hinten verlaufenden Abschnitt auf.

Mit dem Schlitten 12 ist ein Hebel 22 schwenkbar gekoppelt, der mittels eines Schiebezapfens 24 in eine Schiebekulisse am Deckelhalter eingreift. Der Schiebezapfen 24 bildet zusammen mit der Schiebekulisse 26 eine Schiebekulissenführung. Mit dem Schiebezapfen 24 ist auch der Schieber 28 gekoppelt, der sich entlang dem Deckelhalter 18 vom Schiebezapfen 24 nach hinten erstreckt. An seinem hinteren Ende ist der Schieber 28 mit einem Übersetzungszapfen 30 versehen, der in eine Übersetzungskulisse 32 am Deckelhalter 18 eingreift. Der Übersetzungszapfen 30 zusammen mit der Übersetzungskulisse 32 bildet eine ÜbersetzungskulissenRkung. Die Übersetzungskulisse 32 erstreckt sich von vorne nach hinten betrachtet zunächst schräg nach oben ansteigend und anschließend waagrecht nach hinten.

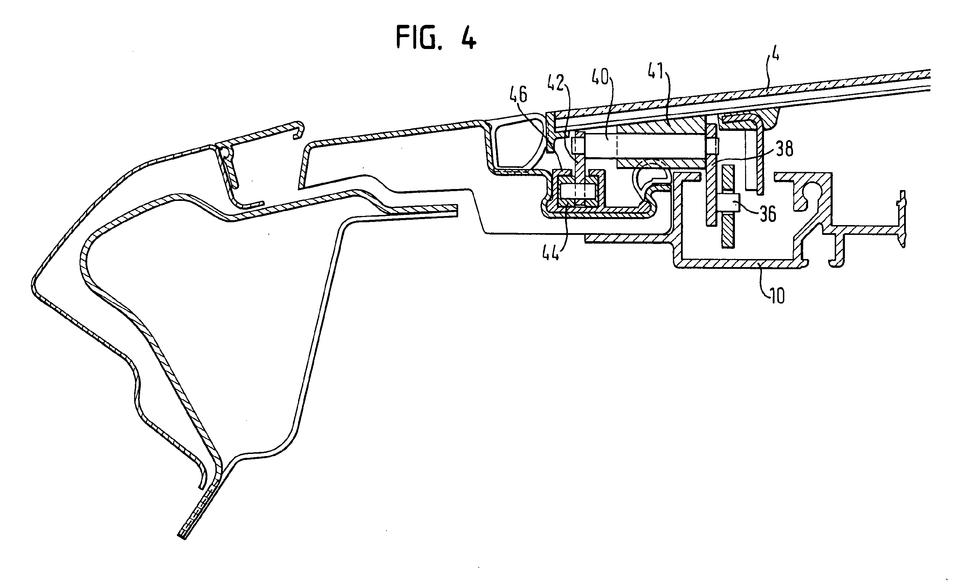

Der Schieber 28 weist kurz vor seinem hinteren, in die Übersetzungskulisse 32 eingreifenden Ende eine Schwenkkulisse 34 auf, die sich von vorne nach hinten betrachtet zunächst gerade nach hinten und dann schräg nach unten abfallend erstreckt. In die Schwenkkulisse 34 greift ein Schwenkzapfen 36 ein, der zusammen mit der Schwenkkulisse 34 eine Schwenkkulissenführung bildet. Der Schwenkzapfen 36 ist an einem Schwenkhebel 38 angebracht, dessen vom Schwenkzapfen 36 abgewandtes Ende drehfest an einer Welle 40 angebracht ist. Die Welle 40 ist drehbar am Deckel bzw. einem mit diesem verbundenen Teil gelagert. Dies ist in Figur 4 durch den Lagerblock 41 angedeutet.

Ebenfalls mit der Welle 40 ist ein Ausstellhebel 42 verbunden, der relativ zum Schwenkhebel 38 um etwa 90° verdreht ist. Das von der Welle 40 abgewandte Ende des Ausstellhebels 42 ist mit einem Gleiter 44 versehen, der in einer Ausstellbahn 46 in vertikaler Richtung festgeführt ist, jedoch in Längsrichtung verschiebbar ist. Die Ausstellbahn 46 kann Teil der Führungsschiene 10 oder ein an dieser angesetztes Teil sein. Insbesondere kann die Ausstellbahn als separates Teil im Naßbereich angeordnet sein, während die Führungsschiene im Trockenbereich angeordnet ist.

In der Ausgangsstellung (siehe sämtliche Figuren abgesehen von den Figuren 1 und 3), in welcher der Deckel 4 geschlossen ist, befindet sich der Schlitten 12 maximal nach vorne verschoben. Der Hubzapfen 16 befindet sich am hinteren, unteren Ende der Hubkulisse 14 und am vorderen, unteren Ende der Kulissenbahn 20. Die Vorderkante des Deckels 4 ist somit sowohl in Längsrichtung als auch in vertikaler Richtung blockiert.

Aufgrund der Kopplung zwischen dem Schlitten 12 und dem Schieber 28 über dem Hebel 22 befindet sich der Schieber in einer vorderen Stellung, in welcher der Schiebezapfen 24 sich am vorderen Ende der Schiebekulisse 26 befindet. Gleichzeitig befindet sich der Übersetzungszapfen 30 am vorderen, unteren Ende der Übersetzungskulisse 32.

Dadurch befindet sich der Schwenkzapfen 36 am hinteren, unteren Ende der Schwenkkulisse 34, so daß der Ausstellhebel 42 eine etwa waagrechte Position einnimmt. Durch den Ausstellhebel 42, der zum einen mit dem Gleiter 44 in die Ausstellbahn 46 eingreift und zum anderen durch die Welle 40 am Deckel festgelegt ist, ist auch der Hinterrand des Deckels 4 in vertikaler Richtung blockiert.

Wenn der Deckel 4 geöffnet werden soll, wird der Schlitten 12 in der Führungsschiene 10 nach hinten verschoben. Dadurch wird der Hubzapfen 16 zunächst nur geringfügig nach oben bewegt, wodurch der Vorderrand des Deckels sich nur geringfügig nach oben und nach hinten bewegt. Allerdings verschiebt der Hebel 22 den Schieber 28 relativ zum Deckelhalter 18 nach hinten. Dies bewirkt zum einen, daß die Übersetzungskulissenführung den hinteren Bereich des Schiebers 28 nach oben schiebt. Dies führt dazu, daß der Schwenkzapfen 36 nach hinten und oben bewegt wird. Die Verschiebung des Schiebers bewirkt zum anderen, daß sich die Schwenkkulisse 34 relativ zur Welle 40 verschiebt, so daß der Schwenkzapfen 36 in der Schwenkkulisse 34 noch weiter nach hinten oben verstellt wird. In der Darstellung der Figuren 2 und 3 führt der Schwenkhebel 38 eine Bewegung entgegen dem Uhrzeigersinn aus. Dies führt dazu, daß auch der Ausstellhebel 42 entgegen dem Uhrzeigersinn bewegt wird. Diese Drehung bewirkt, daß der Deckel 4 nach oben ausgestellt wird, da sich der Ausstellhebel 42 an seinem unteren Ende mittels des Gleiters 44 an der Ausstellbahn 46 abstützt. Die Ausstellbewegung des Hinterrandes des Deckels ist beendet, bevor die Hubkulisse 14 den Hubzapfen 16 so weit nach oben verschoben hat, daß dieser in den gerade nach hinten verlaufenden Teil der Kulissenbahn 20 eintritt und der Deckel 4 vom Schlitten nach hinten mitgenommen werden kann. Der Deckel 4 wird dann außerhalb bzw. oberhalb des Dachelements 5 nach hinten verschoben.

Wenn der Deckel 4 wieder geschlossen werden soll, wird der Schlitten nach vorne verschoben, wobei der gesamte Bewegungsablauf in umgekehrter Reihenfolge abläuft.

Der besondere Vorteil des beschriebenen Schiebedachsystems besteht darin, daß der Hinterrand des Deckels allein durch den sehr schmal bauenden Ausstellhebel 42 am Dach abgestützt ist. Dieser schmale Ausstellhebel kann leicht entlang einer Dichtung in den Schlitz verschoben werden, der seitlich neben dem Dachelement 5 vorgesehen ist. Durch die Zwangskopplung mit dem vorderen Ausstellmechanismus, insbesondere gebildet durch die Hubkulissenführung und den Schlitten 12, läßt sich der hintere Ausstellmechanismus sehr präzise kontrollieren und steuern.

### Bezugszeichenliste:

2: Fahrzeugdach
3: Öffnung
4: Deckel
5: Dachelement
10: Führungsschiene
12: Schlitten
14: Hubkulisse
16: Hubzapfen
18: Deckelhalter
20: Kulissenbahn
22: Hebel
24: Schiebezapfen
26: Schiebekulisse
28: Schieber
30: Übersetzungszapfen
32: Übersetzungskulisse
34: Schwenkkulisse
36: Schwenkzapfen
38: Schwenkhebel
40: Welle
41: Lagerblock
42: Ausstellhebel
44: Gleiter
46: Ausstellbahn

## Patentansprüche

1. Schiebedachsystem mit einem Deckel (4), der dafür ausgelegt ist, über ein Dachelement (5) nach hinten verschoben zu werden, einer Führungsschiene (10) und einem vorderen Ausstellmechanismus (12, 14, 16, 20), mit dem ein Vorderrand des Deckels (4) nach außen ausgestellt werden kann, **dadurch gekennzeichnet, daß** ein hinterer Ausstellmechanismus (34, 36, 38, 40, 42) vorgesehen ist, mit dem ein Hinterrand des Deckels nach außen ausgestellt werden kann und der mit dem vorderen Ausstellmechanismus gekoppelt ist.

2. Schiebedachsystem nach Anspruch 1, **dadurch gekennzeichnet, daß** der hintere Ausstellmechanismus einen Ausstellhebel (42) aufweist, der am Deckel (4) gelagert ist und sich an der Führungsschiene (10) abstützt.

3. Schiebedachsystem nach Anspruch 2, **dadurch gekennzeichnet, daß** der Ausstellhebel (42) mit einem Schwenkhebel (38) gekoppelt ist, der wiederum mit dem vorderen Ausstellmechanismus gekoppelt ist.

4. Schiebedachsystem nach Anspruch 3, **dadurch gekennzeichnet, daß** der Schwenkhebel (38) und der Ausstellhebel (42) drehfest an einer Welle (40) angebracht sind, die am Deckel (4) drehbar gelagert ist.

5. Schiebedachsystem nach Anspruch 3 oder Anspruch 4, **dadurch gekennzeichnet, daß** der Schwenkhebel (38) mit einem Schieber (28) gekoppelt ist, der an einem Deckelhalter (18) gelagert ist, der in der Führungsschiene (10) verschiebbar ist.

6. Schiebedachsystem nach Anspruch 5, **dadurch gekennzeichnet, daß** der Schwenkhebel (38) mittels einer Schwenkkulissenführung (36, 38) mit dem Schieber (28) gekoppelt ist.

7. Schiebedachsystem nach Anspruch 5 oder Anspruch 6, **dadurch gekennzeichnet, daß** der Schieber (28) im Bereich des hinteren Ausstellmechanismus mittels einer Übersetzungskulissenführung (30, 32) mit dem Deckelhalter (18) gekoppelt ist.

8. Schiebedachsystem nach einem der Ansprüche 5 bis 7, **dadurch gekennzeichnet, daß** ein Schlitten (12) vorgesehen ist, der in der Führungsschiene (10) verschiebbar ist, und daß der Schieber (28) mittels eines Hebels (22) mit dem Schlitten (12) gekoppelt ist.

9. Schiebedachsystem nach einem der Ansprüche 5 bis 8, **dadurch gekennzeichnet, daß** der Schieber (28) an seinem vorderen Ende mittels einer Schiebeführung (24, 26) mit dem Deckelhalter verbunden ist.

10. Schiebedachsystem nach einem der Ansprüche 8 und 9, **dadurch gekennzeichnet, daß** der Deckelhalter (18) mit dem Schlitten (12) mittels einer Hubkulissenführung (14, 16) gekoppelt ist.
